# EUROPEAN PATENT SPECIFICATION

(11) **EP 0 511 973 B1**
(45) Date of publication and mention of the grant of the patent: **20.03.1996**
(21) Application number: 91901595.8
(22) Date of filing: 17.12.1990
(51) Int. Cl.: C22B 19/04, C22B 19/30, C22B 7/02, C22B 4/00, C22B 19/18

(54) **METAL RECOVERY**
RÜCKGEWINNUNG VON METALL
RECUPERATION DE METAL

(30) Priority: 22.12.1989 GB 8928997
(43) Date of publication of application: 11.11.1992
(73) Proprietor: TETRONICS RESEARCH & DEVELOPMENT COMPANY LIMITED, Faringdon Oxfordshire, SN7 9AJ (GB); INTERNATIONAL MILL SERVICE INC., Horsham, Pennsylvania 19044-3954 (US); MULTISERV INTERNATIONAL LIMITED, London SW14 4NB (GB)
(72) Inventor: COWX, Peter Malcolm, Ashbury, Wiltshire SN6 8LX (GB)
(74) Representative: Shaw, Laurence
(86) International application number: GB9001961
(87) International publication number: WO9109977

(56) References cited:
- GB-A- 620 644
- GB-A- 2 077 767
- GB-A- 2 094 353
- US-A- 2 671 725
- US-A- 3 909 243
- US-A- 4 802 919
- Erzmetall, vol. 34, no. 2, February 1981, Verlag Chemie GmbH, (Weinheim, DE), G. Björling et al.: "Das PLASMAZINC-Verfahren für die Verwertung gering- wertiger Rohstoffe", pages 77-81
- Revue de Métallurgie - CIT, vol. 83, no. 8-9, August/September 1986, J. Skogberg et al.: "Applications industrielles de la technique du plasma développée par SKF: Plasmachrome et Plasmadust", pages 693-702
- Revue de Métallurgie - CIT, vol. 80, no. 6, June 1983, (Paris, France), H.G. Herlitz et al.: "Une nouvelle génération de procédés de réduction basés sur la technologie du plasma", pages 511-520
- Plasma Chemistry and Plasma Processing, vol. 9, no. 1, (suppl.), March 1989, Plenum Publishing Corp., (Bristol, GB), D.R. Mac Rae: "Plasma arc process systems, reactors, and applications", pages 85s-118s

## Description

The fume generated in the Electric Arc Fumace (EAF) production of carbon steel typically contains 30 to 50% iron oxide, 15 to 35% ZnO and 5 to 40% PbO. There is economic advantage in selectively reducing and recovering at least the zinc in such a way as to leave the iron present as an oxide in a slag phase.

It is known to selectively reduce steelmaking dusts in a rotary kiln by counter-current contact between condensed material and gas phases. The relatively low temperature and correspondingly high oxygen potential of the exhaust gas stream means that the zinc can be recovered only as a low value oxide product. In the treatment of polymetallic materials, it is important to control the furnace atmosphere (redox potential), temperature and the slag chemistry very closely in order to optimise the recovery of valuable metal product. Accordingly, it is preferable that a furnace be used, in which the heat input is independent of the furnace operating atmosphere.

It is known to vaporise a mixture of the EAF dust, a reductant and a flux in a plasma arc furnace to produce metal vapours, and to condense the vapours in a condenser. The practical yield obtained is less than the theoretical value.

GB-A-2077767 teaches recovering volatile metal from flue dust in which the dust with reducing agent is introduced adjacent a plasma torch towards the bottom of a shaft reactor filled with a column of coke. The gaseous reduction products rise through the column of coke and are extracted at the top of the shaft.

It is an overall object of this invention to provide a particularly efficient way of carrying out the reduction and recovery process. The invention is based on the appreciation that if the content of a carbonaceous reductant is controlled, foaming of the mass in the furnace leading to carry over of particulates and contamination of the metal vapour can be avoided. It has also been appreciated that the method of the invention may advantageously be used in a system in which the temperature of the liquid melt in the condenser should be controlled in a particular way to increase the yield and that a rotor mechanism in the condenser must be constructed and located in a particular way in order to withstand rotary speeds necessary to recover metal at high yield.

According to the invention, there is provided a method of recovering zinc from a mass containing oxides of zinc and iron, such as dust resulting from the manufacture of carbon steel in an electric arc furnace, the method comprising feeding the mass and a carbonaceous material and a slag-forming flux material to a plasma furnace, melting the mixture to form zinc vapour and passing the zinc vapour to a condenser to recover zinc, the mixture being melted using a plasma arc formed using an electrode extending inwardly from the roof of the furnace, characterised in that the content of the carbonaceous material comprises from 3% to 20% by weight of the mixture to be melted and is sufficient to reduce the zinc oxide to zinc and the ion oxide (Fe₂0₃) to Fe0 and Fe without causing the molten mass in the furnace to be subjected to excessive foaming.

Preferably the mass to be treated comprises approximately (by weight) 20 to 30% Fe, 15 to 30% Zn, balance Pb, Ca, Cl, Fe, Na and K.

Preferably the flux comprises sources of Ca0 or Si02 and optionally Al₂0₃.

It is a much preferred feature of the method that the content of the carbonaceous material is adjusted relative to both the mass and the flux. As indicated above the content of the carbonaceous material comprises from 3% to 20% by weight of the mixture to be melted. More specifically, the content of carbonaceous material is about 10% in the case of a mixture comprising
30% zinc oxide
40% iron oxide
and the content of carbonaceous material is about 8% in the case of a mixture comprising
20% zinc oxide
50% iron oxide

While the carbonaceous material may be selected from a wide range of substances, preferably the carbonaceous material is selected from coal, coke, anthracite or the like having a high carbon dioxide reactivity of at least 2 as measured by the NCB blast furnace test.

The method of the invention is preferably used with a condenser for use in a method of condensing zinc or like vapour, the condenser comprising a vessel having a chamber having a roof, an inlet in the roof for the supply of the metal vapour, an outlet spaced from the inlet and located in the roof for the egress of uncondensed gaseous material, a rotary impeller mounted in the roof and extending towards the floor, an outlet for egress of condensed material present adjacent the floor, a cooling circuit present in the vessel above the floor, arranged to cool the liquid zinc sufficiently to cause condensation of the zinc vapours.

Thus the method of the invention is preferably used in junction with a method of condensing metal vapour in a vessel as just defined, the method comprising passing metal vapour into the vessel through the inlet, rotating the impeller to cause a spray of liquid zinc and the vapours to condense thereon, positioning the rotary shaft so that the lower end thereof extends a short distance into the condensed metal, passing cooling medium through the cooling circuit to cool the condensed liquid metal, and removing the liquid metal from the vessel via the outlet.

Preferably, the shaft and rotor blade assembly has an alloy outer portion and is rotated at a speed of about 300 to about 600 rmp. The alloy is preferably molybdenum tungsten or the like.

Preferably the rotor assembly comprises a metal rotor shaft, a sleeve mounted on the shaft and a rotor blade assembly, the sleeve and rotor blade being formed of molybdenum tungsten alloy or the like or graphite.

In order that the invention may be well understood it will now be described by way of example only, with reference to the embodiment shown in the accompany drawings in which:
Figure 1 is a schematic diagram of the process of recovering zinc from a zinciferous material;
Figure 2 is a vertical sectional view of the zinc condenser unit;
Figure 3 is a transverse sectional view of the condenser unit;
Figure 4 is an elevation, partly in section, showing the rotor in the condenser.

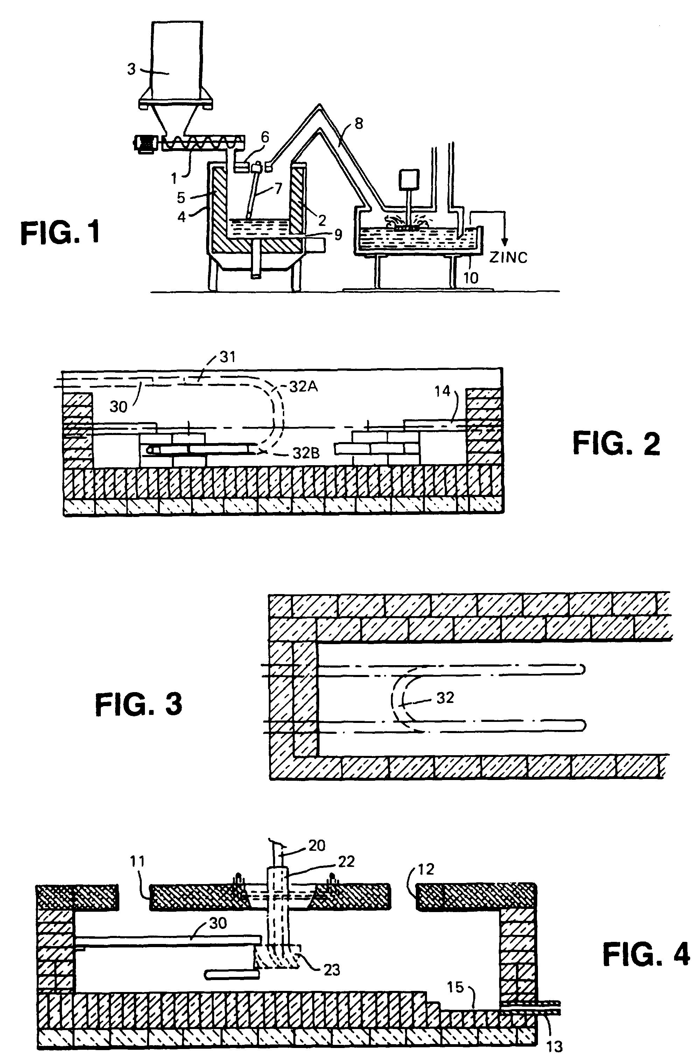

The diagram of figure 1 shows schematically the apparatus used in recovering zinc metal from electric arc furnace dust formed in the melting of carbon steel. A proportioned mixture of the dust, a carbonaceous material, typically coal, and a slag fluxing material e.g. calcium oxide, are all fed by a screw 1 to an open bath furnace 2 from a common hopper 3. The furnace comprises a vessel having a mild steel shell 4 and refractory lining 5 formed of carbon impregnated magnesia or magnesia-chrome bricks. The furnace has a roof section 6 which is watercooled and lined with a cast lining of high grade alumina. A plasma torch 7 or graphite electrode extends inwardly from the roof of the furnace. The gas stabilised plasma arc formed is transferred from the water cooled plasma torch or graphite electrode to the furnace melt which is in electrical contact with a return mild or stainless steel billet built into the furnace hearth or a suitable conductive hearth refractory. The vapours arising from the melting of the metal are fed out via a conduit 8 and the slag and any pig iron formed are intermittently tapped via a bottom outlet 9.

The conduit 8 leads to a zinc condenser 10 which is shown more fully in Figures 2 to 4.

The zinc condenser comprises a steel vessel having a refractory brick lining. The roof contains an inlet 11 for the metal vapours recovered from the furnace 1 and an outlet 12 which leads to a baghouse filter unit, not shown. An outlet 13 for the condensed zinc metal is present in a lower corner of the vessel remote from the inlet 11. A lintel 14 is present about a dished floor portion 15 to define a weir for the metal, to restrict the entrapment of contaminants. An impeller 20 extends downwardly from the roof of the condenser and is rotated by a motor, not shown. The rotor comprises a steel shaft 21 on which is fitted a rotor sleeve 22 having a suitably shaped rotor blade assembly 23. The sleeve 23 is made of a molybdenum tungsten alloy or graphite or like refractory tough material. A cooling circuit 30 is present in the lower part of the condenser and as shown in Figures 2 and 3, comprises a pipe 31 containing pumped cooling medium, e.g. water, leading into the vessel including a generally centrally located U-loop 32. As shown, the loop 32 is reversely bent and includes an upper portion 32A and a lower portion 32B; the loop is located immediately below the rotor blade assembly 23. The walls of the condenser include windows, not shown, which in use are blocked with refractory bricks which can be knocked out for access to the interior of the condenser for ease of cleaning, when required.

In use, the preblended mixture of dust, about 5% to about 20% coke and flux is fed through feed ports in the roof into the furnace 1. The materials are heated as they descend through the furnace atmosphere and are then rapidly dissolved into a melt. The power input is controlled to maintain an operating melt temperature of between 1200 and 1600°C, preferably about 1500°C. Zinc and lead oxides are carbothermically reduced and volatilised as metal vapours and pass from the furnace into the condenser 10, leaving slag and pig iron which are tapped off as required. The impeller 21 is rotated in a bath of molten zinc in the condenser 10 to generate a spray of metal droplets of large surface area to enable efficient condensing of the zinc vapour. The droplets accumulate in the lower part of the vessel 10. The height of the rotor is adjusted so that the lower half of the rotor blade assembly 23 is permanently in the liquid. The speed of rotation is adjusted to between about 300 to about 600 rpm to control the rate of condensation and zinc droplet size; because of the nature of the material of the rotor sleeve, it is able to withstand the rotary forces i.e. torque generated. The temperature of the liquid metal is controlled by the extraction of heat via the cooling coil 30, the shape of which and the location relative to the rotor assembly is selected, for optimum effect. The temperature of the liquid material is kept at about 525°C. The gases from the outlet 12 of the condenser 10 are burned in a combustion chamber with an excess of air being employed to cool the gas stream entering the baghouse.

The proportion of the coke added to the dust to be treated is selected so that sufficient CO is generated to reduce the zinc oxide in the dust to zinc metal and the iron oxide from Fe₂0₃ to Fe0 and Fe without the generation of excessive foam in the melt because if such foaming takes place, non-zinc materials, e.g. slag, will be carried over into the condenser reducing the purity of the zinc to be recovered and the operating life of the watercooled plasma torch may be reduced. A controlled amount of slag foaming is desirable to reduce carry-over of feed materials, to reduce the fuming of unwanted volatile species (Mg, SiO, 'FeO') formed in the plasma arc hot spot and to improve the thermal efficiency of the process by shielding the furnace refractories from the plasma arc. The flux additions to the furnace are proportioned to produce a low melting point, high fluidity slag with a basicity ratio CaO: SiO₂ of about 1.4 to about 0.8:1.

As a result of the control of the content of the carbonaceous material, plus the efficiency of recovery of the zinc metal by the rotation of the rotor at the selected speed and the control of the temperature of the liquid zinc, the overall efficiency approaches the theoretical value.

## Claims

1. A method of recovering zinc from a mass containing oxides of zinc and iron, the method comprising feeding the mass and a carbonaceous material and a slag-forming flux material to a plasma furnace, melting the mixture to form zinc vapour, and passing the zinc vapour to a condenser to recover zinc, the mixture being melted using a plasma arc formed using an electrode extending inwardly from the roof of the furnace, characterised in that the content of the carbonaceous material comprises from 3% to 20% by weight of the mixture to be melted and is sufficient to reduce the zinc oxide to zinc and the iron oxide (Fe₂0₃) to Fe0 and Fe without causing the molten mass in the furnace to be subjected to excessive foaming.

2. A method according to Claim 1, **characterised in that** the mixture to be melted contains about 30% by weight of zinc oxide and about 40% by weight of ion oxide and the content of carbonaceous material is about 10% by weight.

3. A method according to Claim 1, **characterised in that** the mixture contains about 20% by weight of zinc oxide and about 50% by weight of iron oxide and the content of carbonaceous material is about 8% by weight.

4. A method according to any preceding Claim **characterised in that** the carbonaceous material is selected from coal, coke anthracite or a material having a carbon dioxide reactivity of at least 2 measured by the NCB blast furnace test.

5. A method according to any preceding Claim **characterised in that** the mass to be treated includes lead, calcium, sodium and potassium.

6. A method according to any preceding Claim **characterised in that** the flux is selected to produce a low melting point high fluidity slag with a basicity ratio Ca0:Si0₂ of 1.4 to 0.8:1.

7. A method according to Claim 6, **characterised in that** the slag-forming flux material comprises sources of Ca0 or Si0₂ and optionally Al₂0₃.

## Patentansprüche

1. Verfahren zur Rückgewinnung von Zink aus einer zink- und eisenoxidhaltigen Masse, umfassend die folgenden Schritte: Beschicken eines Plasmaofens mit der Masse und einem kohlenstoffhaltigen Material und einem schlackebildenden Flußmaterial, Schmelzen des Gemisches zur Bildung von Zinkdampf und Befördern des Zinkdampfes zu einem Kondensator zur Rückgewinnung des Zinkes, wobei das Gemisch mit einem Plasmalichtbogen geschmolzen wird, der mit Hilfe einer Elektrode gebildet wird, die vom Ofendach nach innen verläuft, dadurch gekennzeichnet, daß der Gehalt des kohlenstoffhaltigen Materials zwischen 3 und 20 Gew.-% des zu schmelzenden Gemisches ausmacht und ausreicht, um das Zinkoxid zu Zink und das Ionenoxid (Fe₂0₃) zu Fe0 und Fe zu reduzieren, ohne daß dabei die geschmolzene Masse im Ofen zu stark schäumt.

2. Verfahren nach Anspruch 1, dadurch gekennzeichnet, daß das zu schmelzende Gemisch etwa 30 Gew.-% Zinkoxid und etwa 40 Gew.-% Eisenoxid enthält und daß der Gehalt des kohlenstoffhaltigen Materials etwa 10 Gew.-% beträgt.

3. Verfahren nach Anspruch 1, dadurch gekennzeichnet, daß das Gemisch etwa 20 Gew.- % Zinkoxid und etwa 50 Gew.-% Eisenoxid enthält und daß der Gehalt des kohlenstoffhaltigen Materials bei etwa 8 Gew.-% liegt.

4. Verfahren nach einem der vorhergehenden Ansprüche, dadurch gekennzeichnet, daß das kohlenstoffhaltige Material ausgewählt wird aus Kohle, Koks, Anthrazit oder einem Material mit einer Kohlendioxidreaktionsfähigkeit von wenigstens 2, gemessen mit dem NCB-Gebläseofentest.

5. Verfahren nach einem der vorhergehenden Ansprüche, dadurch gekennzeichnet, daß die zu behandelnde Masse Blei, Calciumm, Natrium und Kalium enthält.

6. Verfahren nach einem der vorhergehenden Ansprüche, dadurch gekennzeichnet, daß das Flußmittel so ausgewählt wird, daß eine Schlacke mit niedrigem Schmelzpunkt und hoher Fluidität und einem Basizitätsverhältnis von Ca0:Si02 von 1,5 bis 0,8 zu 1 erzeugt wird.

7. Verfahren nach Anspruich 6, dadurch gekennzeichnet, daß das schlackebildende Flußmaterial Spuren von Ca0 oder Si02 und bei Bedarf Al₂O₃ enthält.

## Revendications

1. Méthode de récupération du zinc à partir d'une masse contenant des oxydes de zinc et de fer, la méthode comprenant l'alimentation de la masse et du matériau carbonifère ainsi que d'un matériau fondant de scorification dans un four à plasma, la fusion dut mélange pour former de la vapeur de zinc et le passage de la vapeur de zinc dans un condensateur pour récupérer le zinc, le mélange étant fondu en utilisant un arc à plasma formé à l'aide d'une électrode se prolongeant à l'intérieur à partir de la voûte du four, caractérisée en ce que le contenu du matériau carbonifère comprend de 3 % à 20 % par poids du mélange à fondre et est suffisant pour réduire l'oxyde de zinc en zinc et l'oxyde de fer (Fe₂O₃) en FeO et Fe sans que la masse en fusion dans le four ne soit sujette à un excès de formation de mousse.

2. Méthode qui, selon la Revendication 1, est caractérisée en ce que le mélange à fondre contient environ 30 % par poids d'oxyde de zinc et environ 40 % par poids d'oxyde de fer et le contenu du matériau carbonifère est de 10 % par poids environ.

3. Méthode qui, selon la Revendication 1, est caractérisée en ce que le mélange contient environ 20 % par poids d'oxyde de zinc et environ 50 % par poids d'oxyde de fer et le contenu du matériau carbonifère est environ de 8 % par poids.

4. Méthode qui, selon toute Revendication précédente, est caractérisée en ce que le matériau carbonifère est sélectionné à partir de charbon, de coke, d'anthracite ou d'un matériau ayant une réactivité au dioxyde de carbone d'au moins 2, mesurée par le test de haut fourneau du NCB.

5. Méthode qui, selon truite Revendication précédente, est caractérisée en ce que la masse à traiter inclut du plomb, du calcium, du sodium et du potassium.

6. Méthode qui, selon toute Revendication précédente, est caractérisée en ce que le fondant est sélectionné de manière à produire un laitier très fluide avec un point de fusion peu élevé, ayant un rapport de basicité CaO:SiO₂ de 1,4 à 0,8:1.

7. Méthode qui, selon la Revendication 6, est caractérisée en ce que le matériau fondant de scorification comprend des sources de CaO ou de SiO₂ et, facultativement, de Al₂O₃.
